Europäisches Patentamt

European Patent Office

Office européen des brevets

(11) Veröffentlichungsnummer : **0 101 917**
**B1**

# EUROPÄISCHE PATENTSCHRIFT

(45) Veröffentlichungstag der Patentschrift :
28.05.86

(51) Int. Cl.⁴ : **B 23 B 29/04**

(21) Anmeldenummer : 83107265.7

(22) Anmeldetag : 25.07.83

(54) Geteiltes Werkzeug für die spanabhebende Bearbeitung.

(30) Priorität : 30.07.82 DE 3228521
27.11.82 DE 3243948
19.03.83 DE 3309922

(43) Veröffentlichungstag der Anmeldung :
07.03.84 Patentblatt 84/10

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
EP-A- 0 010 074
DE-A- 2 736 412
DE-B- 2 106 854
DE-B- 2 234 389
DE-B- 2 706 469

(73) Patentinhaber : Rall, Gerhard
Sommerhalde 72
D-7142 Marbach (DE)

Hertel, Günther
Mörikestrasse 24
D-8500 Nürnberg (DE)

Hertel, Karl Gustav
Kneippstrasse 12
D-8500 Nürnberg (DE)

(72) Erfinder : Rall, Gerhard
Sommerhalde 72
D-7142 Marbach (DE)
Erfinder : Hertel, Günther
Mörikestrasse 24
D-8500 Nürnberg (DE)
Erfinder : Hertel, Karl Gustav
Kneippstrasse 12
D-8500 Nürnberg (DE)
Erfinder : Kastner, Hermann
Osterholzallee 89
D-7140 Ludwigsburg (DE)

(74) Vertreter : Tergau, Enno et al
Patentanwälte Tergau & Pohl Postfach 11 93 47
Hefnersplatz 3
D-8500 Nürnberg 11 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein geteiltes Werkzeug mit den im Oberbegriff des Patentanspruches 1 enthaltenen Merkmalen, wie es aus EP-A1-0010074 bekannt ist.

Bei modernen Werkzeugmaschinen, bei denen das erfindungsgemäße Werkzeug eingesetzt wird, unterliegen die Werkzeugschneiden einer sehr hohen Beanspruchung. Dies erfordert einen häufigen Wechsel der Werkzeugschneide. Außerdem ist es für universelle Einsatzzwecke dieser Werkzeugmaschinen häufig notwendig, ein Werkzeug gegen ein anders gestaltetes Werkzeug auszutauschen und diesen Austausch sehr schnell vorzunehmen. Daher ist es bereits bekannt, das Werkzeug geteilt aus einem an der Maschine verbleibenden Werkzeugschaft und einem durch eine Kupplung drehfest mit dem Werkzeugschaft verbindbaren Werkzeugkopf herzustellen, wobei der Werkzeugkopf die Werkzeugschneide trägt.

Das bekannte Werkzeug der eingangs genannten Art enthält an der Trennstelle zwischen Werkzeugschaft und Werkzeugkopf prismatische Führungsflächen. Die Zugstange weist einen zylindrischen Zugkopf auf, der in eine an einer Schmalseite offene Ausnehmung des Werkzeugkopfes eingreift. Diese Ausnehmung weist eine schlüssellochartige Querschnittsform auf. Bei diesem Werkzeug kann der Werkzeugkopf stets nur in einer bestimmten Drehstellung des Werkzeugschaftes mit diesem verbunden werden. Das Verbinden und Trennen von Werkzeugkopf und Werkzeugschaft erfolgt dabei auf einer Bewegungsbahn, die etwa rechtwinklig zur Längsachse des Werkzeugschaftes ausgerichtet ist.

Der Erfindung liegt die Aufgabe zugrunde, ein geteiltes Werkzeug der eingangs genannten Art zu schaffen, dessen Werkzeugkopf einfach und schnell mit dem Werkzeugschaft verbindbar und wieder lösbar ist und in Verbundstellung eine hohe Formbeständigkeit und Stabilität auch gegenüber sich während des Bearbeitungsvorganges verändernden Schnittkräften aufweist. Diese Aufgabe wird durch die im kennzeichnenden Teil des Patentanspruches 1 aufgeführten Merkmale gelöst.

Durch die Erfindung weist die Kupplung einen im wesentlichen rotationssymmetrischen Aufbau auf. Dies hat den Vorteil, daß der Werkzeugkopf zur Verbindung mit dem Werkzeugschaft keine bestimmte relative Drehstellung zum Werkzeugschaft aufweisen muß. In jeder Drehstellung des Werkzeugkopfes ist ein sicheres Erfassen seines Zugschaftes durch das Spannfutter der Kupplung gewährleistet. Der Spannkopf kann auf einer geradlinigen Bewegungsbahn mit seinem Zugschaft in das Spannfutter des Werkzeugschaftes eingeführt werden, wobei diese Bewegungsbahn koaxial zur Längsachse des Spannfutters ausgerichtet ist. Die Öffnungs- und Schließbewegung des Spannfutters erfolgt durch eine Längsverschiebung seitens der Zugstange. Die Zugstange steht dabei wenigstens in Anzugsrichtung in einer Formschlußverbindung mit dem Spannfutter, so daß das Spannfutter jede Anzugsbewegung der Zugstange in gleicher Größe mit vollzieht.

Die radial einwärts gerichtete Schließbewegung des Spannfutters wird durch das Zusammenwirken der auf einem Teil ihres Außenumfanges angeordneten Außenkonusfläche mit einer entsprechenden Innenkonusfläche der Ausnehmung des Werkzeugschaftes bewirkt. Bei ihrer Schließbewegung wollzieht das Spannfutter sowohl eine der Längsbewegung der Zugstange entsprechende Axialbewegung als auch eine radial nach innen gerichtete Zangenbewegung. Bei dieser Zangenbewegung greifen die Spannbackenvorsprünge des Spannfutters hinter den radial nach außen stehenden Vorsprung des Zugschaftes des Werkzeugkopfes und nehmen diesen in Anzugsrichtung der Zugstange mit. Das Öffnen des Spannfutters erfolgt durch eine Bewegung der Zugstange in Richtung auf den Werkzeugkopf, bei der das Spannfutter mitgenommen wird. Mit dieser in Richtung auf den Werkzeugkopf verlaufenden Axialbewegung gerät die Außenkonusfläche des Spannfutters zunehmend außer Beaufschlagung durch die Innenkonusfläche des Werkzeugschaftes. Nunmehr kann der Werkzeugkopf einfach in Axialrichtung vom Werkzeugschaft abgezogen werden, weil der radial nach außen stehende Vorsprung des Zugschaftes des Werkzeugkopfs infolge der radial nach außen gerichteten Öffnungsbewegung der Spannbacken außer Überdeckung mit den nach innen gerichteten Spannbackenvorsprüngen bringbar ist.

Durch das Kennzeichnungsmerkmal des Anspruches 2 wird von der Innenkonusfläche der Ausnehmung des Werkzeugschaftes eine zentrierende Kraft auf den Zugschaft ausgeübt, die der von der Zugstange über das Spannfutter auf den Zugschaft ausgeübten axialen Zugkraft überlagert ist. Dadurch erhält der Werkzeugkopf in einem gewissen Abstand von den Führungs- und Anlageflächen der Trennstelle zum Werkzeugkopf eine zusätzliche radiale Einspannung. Dadurch wird die Steifigkeit der Verbindung zwischen Werkzeugkopf und Werkzeugschaft erhöht.

Durch das Kennzeichnungsmerkmal des Anspruches 3 wird die bereits durch das Kennzeichnungsmerkmal des Anspruches 2 auf den Zugschaft ausgeübte Zentrierwirkung axial auf mehrere Stellen verteilt. Dasselbe Ziel wird bezüglich der von den Innenkonusflächen der Ausnehmung des Werkzeugschaftes auf die Außenkonussegmente der Spannbacken ausgeübten, radial nach innen gerichteten Kräfte angestrebt. Diese Kräfte sollen in Axialrichtung verteilt an mehreren Stellen der Spannbacken angreifen und dadurch bei der Schließbewegung des Spannfutters für eine gleichmäßige Schließbewegung sorgen. Eine solche gleichmäßige Schließbewegung ist dann gewährleistet, wenn die Spannbacken des Spannfutters bei der Schließbewegung ihre Parallellage zur Werkzeugachse
nicht ändern.

Durch die Kennzeichnungsmerkmale des Anspruches 5 wird die radial nach innen gerichtete
Schließbewegung der Spannbacken des Spannfutters bereits abgeschlossen, bevor die Zugstange bzw. das Spannfutter ihre Axialbewegung
zur Erreichung der Schließendstellung abgeschlossen haben. Nach Beendigung der radial
einwärts gerichteten Schließbewegung der
Spannbacken werden diese über ihre Zylindersegmentflächen durch deren Anlage an entsprechenden Innenzylinderflächen des Werkzeugschaftes sicher und in großflächigem Kontakt mit vergleichsweise geringer Flächenpressung in radialer Schließstellung gehalten.
Sobald die Zylindersegmentflächen der Spannbacken mit den Innenzylinderflächen der Ausnehmung des Werkzeugschaftes in Kontakt stehen, verringern sich wesentlich die bei weiterem
Anziehen der Zugstange von dem Spannfutter auf
den Zugschaft ausgeübten Keilkräfte bzw. der
wirksame Keilwinkel dieser Keilkräfte. Nunmehr
werden seitens des Spannfutters nur noch durch
die Innenkonus-Segmentflächen der Spannbacken radial nach innen gerichtete und damit
weiterhin zentrierende Keilkräfte auf den Zugschaft des Werkzeugkopfes wirksam. Dies erhöht
die Spann- und Positioniersicherheit des Erfindungsgegenstandes bzw. seiner Kupplung
auch unter schwerer, pulsierender Belastung.

Das Kennzeichnungsmerkmal des Anspruches
7 insbesondere in Gemeinsamkeit mit dem des
Anspruches 8 beruht auf folgenden Überlegungen : Bei dem erfindungsgemäßen Werkzeug
liegen die Spannbacken des Spannfutters sowohl
innen als auch außen im Bereich zweier in
Axialrichtung nebeneinanderliegender Konen sowohl am Zugschaft des Werkzeugkopfes als auch
an der Umfangswand der Ausnehmung des Werkzeugschaftes an. Diese mindestens Vierpunkt-
bzw. Vierflächen-Anlage an zwei Bezugsteilen
(Zugschaft, Werkzeugschaft) bedeutet eine statische Überbestimmtheit, durch die nicht ohne
weiteres gewährleistet, daß die jeweiligen konischen Anlageflächen an ihren entsprechenden
Gegenflächen tragend anliegen.

Durch die weitere Erfindung gemäß den Ansprüchen 7 und insbesondere des Anspruches 8
wird eine solche bündige Anlage trotz der statischen Überbestimmung gewährleistet, weil die
Anlagebereiche der Konen so über die Längserstreckung der Spannbacken verteilt sind, daß
sich die Spannbacken unter der von der Zugstange aufgebrachten Zugkraft auf Grund der
gegebenen Hebelverhältnisse in Spannstellung
geringfügig elastisch durchbiegen können und
dadurch folgende Wirkungen gewährleisten :
Zum einen ist eine satte Mehrpunktanlage der
Spannbacken sowohl im Bereich ihrer Innenkonus-Segmentflächen am Zugschaft als auch ihrer
Außenkonus-Segmentflächen an den Innenkonusflächen der Ausnehmung im Werkzeugschaft
gewährleistet. Dies ist gerade in gespanntem Zustand des Spannfutters von besonderer Bedeutung für die Beibehaltung der Positioniergenauigkeit des Werkzeugkopfes unter Lastangriff.
Durch den von der Zugstange eingeleiteten Zug
werden infolge der Axiallage der Konen des
Werkzeugschaftes und des Zugschaftes die einzelnen Spannbacken einer Vorspannung unterworfen, die auch unter extremen Lastwechselbeanspruchungen ein sicheres, vorgespanntes Halten des Werkzeugkopfes in Formschlußanlage
am Werkzeugschaft gewährleistet.

Im Bereich der werkzeugkopfseitigen Innen-
und Außenkonus-Segmentflächen des Spannfutters liegt eine Verkeilung der Spannbacken
zwischen dem Zugschaft des Werkzeugkopfes
und dem Werkzeugschaft in etwa einer gemeinsamen Radialebene vor, während die übrigen Anlagebereiche der Spannbacken am Zugschaft und
am Werkzeugschaft jedenfalls in der Spannendstellung in unterschiedlichen Axiallagen an der
Innen- und Außenseite der einzelnen Spannbacken bzw. des Spannfutters angreifen. Somit
werden die durch die Zugstange in die Spannbacken eingeleiteten Biegekräfte in einer Weise
wirksam, daß die Spannbacken sich in diesen
Bereichen geringfügig durchbiegen können und
somit selbsttätig die statischen Unbestimmtheiten der Mehrbereichs-Anlage der Spannbacken
des Spannfutters am Werkzeugschaft und am
Zugschaft des Werkzeugkopfes ausgleichen. Im
Ergebnis ist dadurch eine wirksame Mehrfachspannung des Werkzeugkopfes über eine große
Axiallänge innerhalb des Werkzeugschaftes gewährleistet.

Durch das Kennzeichnungsmerkmal des Anspruches 11 ist gewährleistet, daß mit der axialen
Öffnungsbewegung der Zugstange eine entsprechende Axialbewegung des Spannfutters
verbunden ist, die ein radiales Auseinandertreten
der Spannbacken des Spannfutters ermöglicht.
Das Kennzeichnungsmerkmal des Anspruches 12
begünstigt ein leichtes Öffnen und Schließen der
Spannzange durch ihre Axialverschiebung innerhalb des Werkzeugschaftes seitens der Zugstange.

Das Kennzeichnungsmerkmal des Anspruches
14 ermöglicht es zunächst, daß in vergleichsweise engen Winkelabständen der Werkzeugkopf
praktisch jede gewünschte Drehlage gegenüber
dem Werkzeugschaft einnehmen kann, wobei die
Kupplung in gleicher Weise wirksam ist. Außerdem sichert die Hirth-Verzahnung die gewünschte Drehfestigkeit der Verbindung zwischen
Werkzeugkopf und Werkzeugschaft durch das
formschlüssige Ineinandergreifen der beiderseitigen Verzahnungen. Schließlich hat die Hirth-Verzahnung den großen Vorteil, daß sie bei Zugeinwirkung in Axialrichtung auf den Zugschaft des
Werkzeugkopfes zu einer selbsttätigen Zentrierung des Werkzeugkopfes gegenüber dem Werkzeugschaft bzw. dessen Mittellängsachse führt.
Damit wird eine weitere Zentrierwirkung vom
Werkzeugschaft auf den Werkzeugkopf ausgeübt, die darüber hinaus in erheblichem Axialabstand von der von dem Spannfutter auf den Zugschaft des Werkzeugkopfes ausgeübten Zentrierwirkung angreift. Dies führt in besonderem Maße zu einer hohen Positioniergenauigkeit des Werkzeugkopfes gegenüber dem Werkzeugschaft.

Die Konstruktion gemäß der Erfindung ermöglicht die Anordnung einer durchgehenden Bohrung von der der Werkzeugschneide zugewandten Außenseite des Werkzeugkopfes zum maschinenseitigen Ende der Zugstange. Die Achse der Durchgangsbohrung kann sogar mit der Mittellängsachse des Gesamtwerkzeuges zusammenfallen und damit völlig unabhängig von der jeweiligen Drehstellung des Werkzeugkopfes gegenüber dem Werkzeugschaft wirksam sein. Diese Bohrung kann zur Durchleitung des Lichtstrahls eines optischen oder elektrooptischen Meßsystems dienen, welches beispielsweise die Lage und Unversehrtheit der Werkzeugschneide überwacht. In gleicher Weise kann die Bohrung zur Durchleitung eines Kühl- oder Schmiermittels dienen. Auch können mehrere Bohrungen für unterschiedliche derartige Zwecke vorhanden sein.

Durch das Kennzeichnungsmerkmal des Anspruches 19 bleibt eine die Zugstange und den Zugschaft durchsetzende Durchgangsbohrung im Betrieb frei von äußeren Störeinflüssen. Das Einfügen einer Dichtung zwischen dem Verlängerungsansatz der Zugstange und dem Zugschaft führt zu einer Reibung, die beispielsweise bei einer Axialverschiebung der Zugstrange in Öffnungsrichtung auch eine Axialbewegung auf den Zugschaft und damit den Werkzeugkopf überträgt und dessen Lösung vom Werkzeugschaft begünstigt.

Der Gegenstand der Erfindung wird an Hand von in den Figuren dargestellten Ausführungsbeispielen näher erläutert. Es zeigen :

Figur 1 einen Vertikalschnitt durch das vordere Ende einer ersten Ausführungsform eines erfindungsgemäß ausgebildeten Werkzeugs in Öffnungsstellung des Spannfutters,

Figur 2 eine Darstellung des Werkzeugs gemäß Fig. 1 in Schließstellung des Spannfutters,

Figur 3 einen Vertikalschnitt durch das vordere Ende einer zweiten Ausführungsform des Werkzeugs, dessen Spannfutter oberhalb der Längsachse in Spannstellung und unterhalb der Längsachse in Öffnungsstellung dargestellt ist,

Figur 4 einen Vertikalschnitt durch das vordere Ende einer dritten Ausführungsform des Werkzeugs, dessen Spannzange oberhalb der Längsachse in Spannstellung und unterhalb der Längsachse in Spannstellung und unterhalb der Längsachse in Öffnungsstellung dargestellt ist,

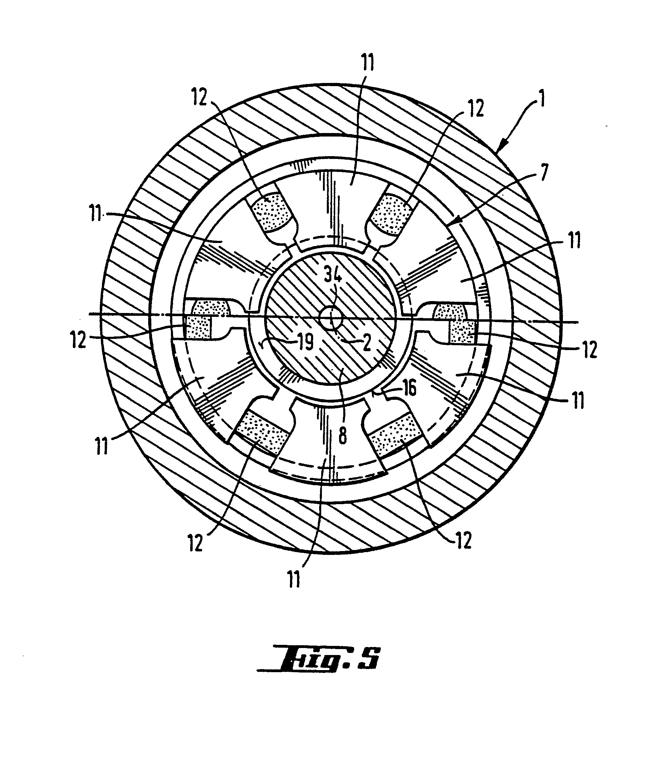

Figur 5 einen Querschnitt entsprechend der Linie V-V in Fig. 4 durch das Werkzeug bei geschlossenem Spannfutter.

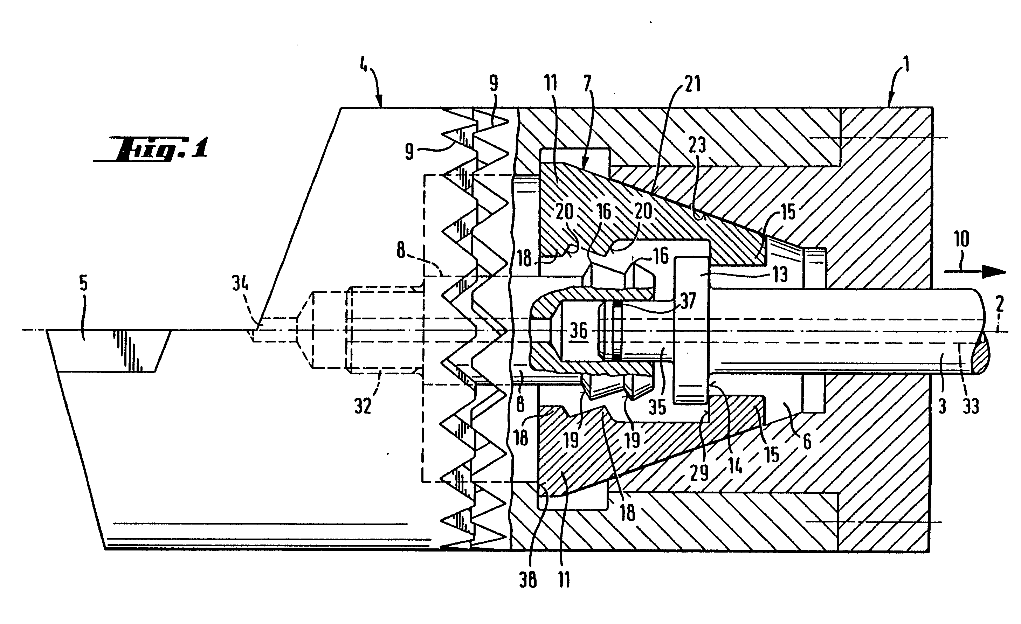

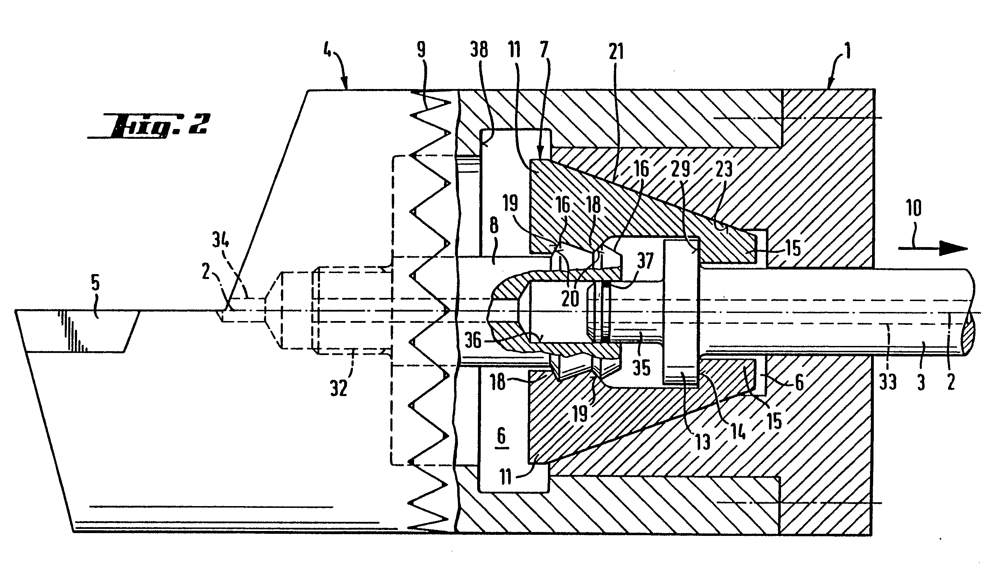

Das Werkzeug besteht im wesentlichen aus dem Werkzeugschaft 1, einer in ihm in Längsrichtung der Werkzeugschaftachse 2 verschiebbar gelagerten Zugstange 3, dem Werkzeugkpof 4 mit an seinem vorderen Ende beispielsweise befestigtem Schneidkörper 5 aus Hartmetall und einem in einer vorderen Ausnehmung 6 des Werkzeugschaftes 1 angeordneten, insgesamt mit 7 bezeichneten Spannfutter. Die Zugstange 3 ist durch einen nicht näher dargestellten Kraftantrieb — z. B. einer Schraubspindel oder einer Hydraulik — in Richtung der Schaftachse 2 zwischen der Öffnungsstellung (Fig. 1) und der Schließstellung (Fig. 2) des Spannfutters 7 verschiebbar. Der Werkzeugkopf 4 ist mit einem in Richtung auf den Werkzeugschaft 1 vorstehenden, eingeschraubten Zugschaft 8 versehen, der in die Ausnehmung 6 des Werzeugschaftes 1 hineinsteht. Der Werkzeugkopf 4 ist durch die Zugstange 3 über das Spannfutter 7 und den Zugschaft 8 formschlüssig gegen die Stirnfläche des Werkzeugschaftes 1 verspannbar, die im Falle der Ausführungsbeispiele durch eine insgesamt mit 9 bezeichnete Hirth-Verzahnung gebildet ist. Die Hirth-Verzahnung 9 ermöglicht einerseits eine Fixierung des Werkzeugkopfes 4 in unterschiedlichen Drehstellungen gegenüber dem Werzeugschaft 1. Andererseits zeichnet sie sich durch eine Selbstzentrierwirkung aus, wenn die Zugstange 3 in deren Anzugsrichtung 10 gegen den Werkzeugschaft 1 gezogen wird.

Das Spannfutter 7 besteht aus mehreren in Richtung der Schaftachse 2 parallel zueinander verlaufenden, die Zugstange 3 und den Spannbolzen 8 umgebenden Spannbacken 11. Zwischen den einzelnen Spannbacken 11 ist jeweils ein aus einem gummielastischen Werkstoff bestehendes Federelement 12 angeordnet, welches mit den Spannbacken 10 lateral stoffschlüssig verbunden ist. Die Verbindung kann z. B. durch Kleben oder Vulkanisieren hergestellt sein, so daß die Spannbacken 11 mit den Federelementen 12 eine Einheit, nämlich das eigentliche Spannfutter 7 bilden. Die Federelemente 12 dienen dazu, die Spannbacken 11 in Öffnungsstellung der Spannzange (Fig. 1) selbsttätig auseinanderzuspreizen und dadurch den Zugschaft 8 des Werkzeugkopfes 4 freizugeben derart, daß der Werkzeugkopf 4 ungehindert in Axialrichtung entgegen der Anzugsrichtung 10 vom Werkzeugschaft 1 lösbar ist.

Die Zugstange 3 ist in ihrem von dem Spannfutter 7 umfaßten Bereich mit einem nach außen vorstehenden, insbesondere ringartigen Radialvorsprung 13 versehen, dessen dem Werkzeugkopf 4 abgewandte Flanke 14 sowohl in Öffnungs- als auch in Schließstellung des Spannfutters 7 zur axialen Zugübertragung auf die Spannbacken 11 von nach innen stehenden, zugstangenseitigen Vorsprüngen 15 radial überdeckt ist.

Der Zugschaft 8 des Werkzeugkopfes 4 ist in seinem vom Spannfutter 7 umfaßten Bereich mit einem radial nach außen stehenden, insbesondere ringartigen Vorsprung 16 versehen. Die der Zugstange 3 abgewandte Flanke 17 des Vorsprunges 16 ist in Schließstellung (Fig. 2) des Spannfutters 7 zur axialen Zugübertragung auf den Werkzeugkopf 4 von den nach innen stehenden, zugschaftseitigen Spannbackenvorsprüngen 18 radial überdeckt. In Öffnungsstellung (Fig. 1) des Spannfutters 7 bleiben die Flanken 17 außer radialer Überdeckung mit den Spannbackenvorsprüngen 18.

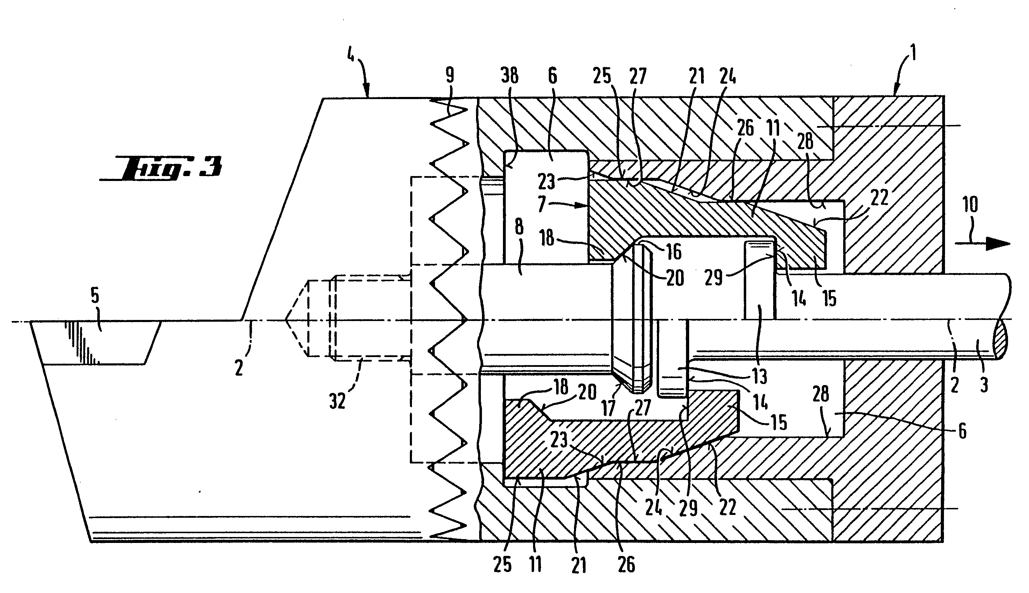

Die der Zugstange 3 abgewandte Flanke 17 (Fig. 3) des Radialvorsprunges 16 des Zugschaftes 8 ist eine sich in Anzugsrichtung 10 der Zugstange 3 öffnende, in den Fig. 1, 2 und 4 mit 19 bezeichnete Außenkonusfläche, die in Schließstellung des Spannfutters 7 von den als Konussegmente ausgebildeten Flanken 20 der Spannbackenvorsprünge 18 (Fig. 3) beaufschlagt ist.

Bei den Ausführungsformen gemäß Fig. 1, 2 und 4 sind zwei Außenkonusflächen 19 in axialem Abstand voneinander auf dem Zugschaft 8 angeordnet. Die diesen Außenkonusflächen 19 entrprechenden Spannbackenvorsprünge 18 sind als Innenkonus-Segmentflächen ausgebildet. Die Außenkonusflächen 19 des Zugschaftes 8 weisen einen gleichen Durchmesser auf.

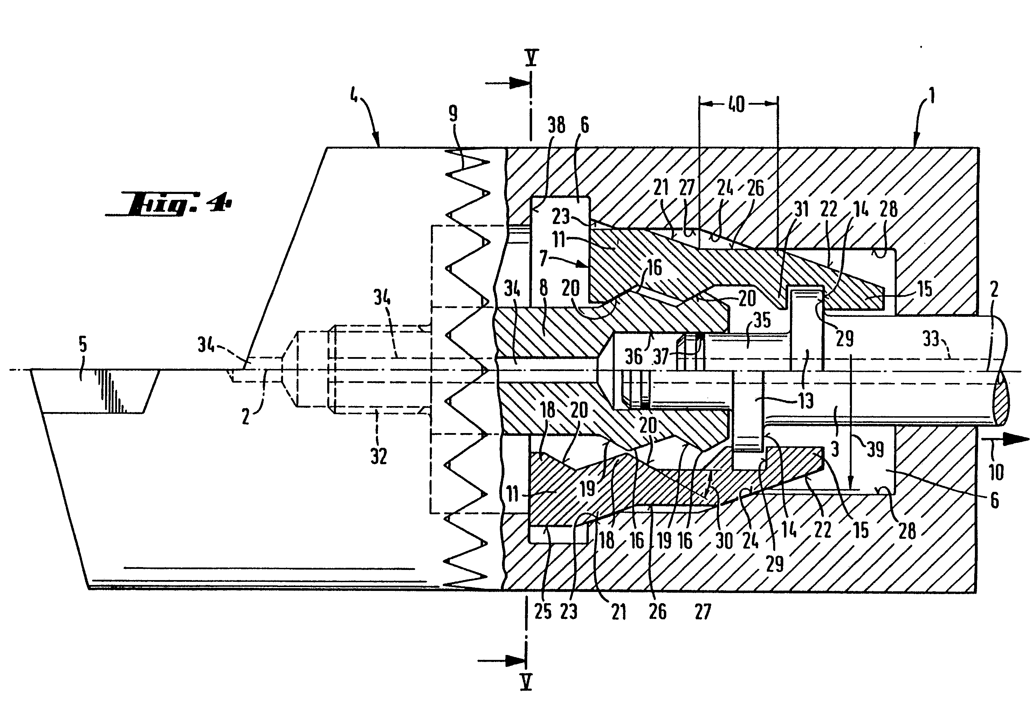

Die Spannbacken 11 weisen auf dem Außenumfang des Spannfutters 7 voneinander axial beabstandet bei den Ausführungsformen gemäß Fig. 3 und 4 zwei sich in Anzugsrichtung 10 der Zugstange 3 schließende Außenkonussegmente 21, 22 auf. Die Umfangswand der Ausnehmung 6 im Werkzeugschaft 1 enthält eine der Anzahl der Außenkonussegmente 21, 22 einer jeden Spannbacke 11 entsprechende Zahl von mit den Außenkonussegmenten 21, 22 zusammenwirkenden Innenkonusflächen 23, 24.

Die Wirkdurchmesser der voneinander in Axialrichtung beabstandeten Außenkonussegmente 21, 22 der Spannbacken 11 sind derart unterschiedlich und gegeneinander abgestuft, daß der Wirkdurchmesser 39 des zugstangenseitigen Außenkonussegments 22 kleiner ist als der des werkzeugkopfseitigen Außenkonussegments 21 und daß sich an jedes Außenkonussegment 21, 22 in Richtung auf den Werkzeugkopf 4 eine Zylindersegmentfläche 25 bzw. 26 anschließt. Folglich sind die Spannbacken 11 bei in Richtung auf den Werkzeugkopf 4 vorgeschobener Zugstange 3 und folglich geöffnetem Spannfutter 7 über ihre Außenkonussegmente 21, 22 an den entsprechenden Innenkonusflächen 23, 24 des Werkzeugschaftes 1 abgestützt. Hingegen liegen die Spannbacken 11 bei in ihrer Anzugsrichtung 10 angezogener Zugstange 3 (Fig. 3 und 4 obere Hälfte) und folglich geschlossenem Spannfutter 7 über ihre Zylindersegmentflächen 25, 26 an entsprechenden Innenzylinderflächen 27, 28 des Werkzeugschaftes 1 an.

Bei der Ausführungsform gemäß Fig. 4 liegen die werkzeugkopffernen Zylindersegmentflächen 26 der Spannbacken 11 in Richtung der Schaftachse 2 mit ihrer Axiallänge 40 mittig zwischen den Zugstangenanlageflanken 29 der Spannbackenvorsprünge 15 und den werkzeugschaftseitigen Innenkonusflächen 20 der Spannbacken 11. Die dem Werkzeugkopf 4 zugewandten Zylindersegmentflächen 25 der Spannbacken 11 liegen in etwa derselben Radialebene wie die dem Werkzeugkopf 4 zugewandten, als Innenkonus-Segmentflächen ausgebildeten Flanken 20 der Spannbacken 11. Die als Innenkonus-Segmentflächen ausgebildeten Flanken 20 schließen mit der Werkzeugschaftachse 2 einen Winkel 30 von etwa 30° ein. An den Spannbacken 11 sind in den zum Werkzeugkopf 4 gerichteten Verschiebeweg des Radialvorsprungs 13 der Zugstange 3 hineinstehende Innenvorsprünge 31 angeordnet.

Der Zugschaft 8 ist mittels einer Gewindeverbindung 32 mit den übrigen Teilen des Werkzeugkopfes 4 verbunden.

Zugstange 3 und Zugschaft 8 sind von mindestens einer in axialer Richtung verlaufenden Bohrung 33 bzw. 34 durchsetzt. Die Bohrungen 33, 34 sind Teil je eines Verbindungsweges zwischen der Werkzeugschneide des Schneidkörpers 5 des Werkzeugkopfes 4 und einem am maschinenseitigen Ende der Zugstange 3 angeordneten Hilfsaggregat (nicht dargestellt). Die Bohrungen 33, 34 fluchten miteinander und dienen entweder zur Durchleitung des Lichtstrahls eines optischen oder elektro-optischen Meßsystems oder auch zur Durchleitung von Kühl- oder Schmiermittel.

Das werkzeugkopfseitige Ende der Zugstange 3 ist mittels eines axialen Verlängerungsansatzes 35 innerhalb einer in das zugstangenseitige Ende des Zugschaftes 8 des Werkzeugkopfes 4 eingebrachten Bohrung 36 axial verschiebbar geführt. Diese Führung zwischen Zugstange 3 und Zugschaft 8 ist flüssigkeitsdicht. Die Dichtung zwischen Verlängerungsansatz 35 der Zugstange 3 und dem Zugschaft 8 ist durch einen den Verlängerungsansatz 35 umgebenden, in einer Ringnut einliegenden Rundschnurring 37 gebildet.

Der Werkzeugschaft 1 ist an seinem werkzeugkopfseitigen Ende mit einem in axialer Richtung wirksamen, insbesondere kreisringförmigen Wegbegrenzungsanschlag 38 für die Öffnungsbewegung des Spannfutters 7 versehen.

Das Werkzeug in der Ausführungsform von Fig. 4 arbeitet wie folgt: Bei in Öffnungsstellung befindlichem Spannfutter (unterer Teil) befinden sich die Spannbacken 11 in aufgespreizter, radial außenliegender Stellung. In dieser Stellung kann der Zugschaft 8 des Werkzeugkopfes 4 frei in den radialen Zwischenraum zwischen den Spannbacken 11 eintreten bzw. aus diesem in Richtung der Achse 2 herausgezogen werden. In dieser Öffnungsstellung des Spannfutters 7 liegen deren radial äußere Oberflächen mit den Außenkonussegmenten 21, 22 an den entsprechenden Innenkonusflächen 23, 24 des Werkzeugschaftes 1 an.

Soll bei angesetztem Werkzeugkopf 4 das Spannfutter 7 geschlossen werden, so wird hierzu die Zugstange 3 in Anzugsrichtung 10 angezogen. Dabei gleiten die Spannbacken 11 des Spannfutters 7 mit ihren Außenkonussegmenten 21, 22 zunächst über die Innenkonusflächen 23, 24 des Werkzeugschaftes 1 mit der Folge, daß die Spannbacken 11 radial nach innen verschoben werden. Dies bedeutet, daß sich das Spannfutter schließt. Mit fortschreitendem Anziehen der Zugstange 3 tritt die gegenseitige Anlage zwischen den Spannbacken 11 und dem Werkzeugschaft 1 aus den beiderseitigen Konusbereichen in die beiderseitigen Zylinderbereiche über. Nunmehr gleiten die Spannbacken 11 mit ihren Zylindersegmentflächen 25, 26 an den entsprechenden Innenzylinderflächen 27, 28 des Werkzeugschaftes 1. Die radial nach innen gerichtete Bewegung der Spannbacken 11 ist abgeschlossen. Es erfolgt nur noch eine in Anzugsrichtung 10 verlaufende Axialbewegung zwischen Spannbacken 11 und Werkzeugschaft 1.

Mit weiterem Anzug der Zugstange 3 in Anzugsrichtung 10 legen sich die als Innenkonus-Segmentflächen ausgebildeten Flanken 20 der Spannbacken 11 mit zunehmender Festigkeit an die entsprechenden Außenkonusflächen 19 des Zugschaftes 8 des Werkzeugkopfes 4 an. Dadurch wird der Werkzeugkopf 4 mit seiner Hirth-Verzahnung 9 noch stärker in die entsprechende Gegenverzahnung der Stirnfläche des Werkzeugschaftes 1 hineingezogen. Nach Erreichung der gegenseitigen Formschlußanlage zwischen Werkzeugkopf 4 und Werkzeugschaft 1 wird die von den konusartigen Flanken 20 der Spannbacken 11 ausgehende Spann- bzw. Verkeilwirkung voll wirksam. Es erfolgt eine Verkeilung der Spannbacken 11 zwischen den Außenkonusflächen 19 des Zugschaftes 8 und insbesondere der werkzeugkopfseitigen Innenzylinderfläche 27 des Werkzeugschaftes 1, und zwar etwa in einer lotrecht durch die Werkzeugschaftachse 2 gelegten Ebene. Unter dem weiteren Anzug der Zugstange 3 wirkt der zugstangenseitige Teil einer jeden Spannbacke 11 gewissermaßen wie ein zweiarmiger Hebel. Dabei sind die beiden Hebelarmenden etwa durch die Zugstangenanlageflanke 29 des Spannbackenvorsprunges 15 und die zugstangenseitige, als Innenkonus-Segmentfläche ausgebildete Flanke 20 der Spannbacke 11 gebildet, während gewissermaßen die zugstangenseitige Zylindersegmentfläche 26 einer jeden Spannbacke 11 das Gegenlager dieses zweiarmigen Hebels bildet. Durch die durch das zugstangenseitige Außenkonussegment 22 gebildete Freischneidung zur Innenzylinderfläche 28 des Werkzeugschaftes 1 kann sich — selbstverständlich im elastischen Bereich — der zugstangenseitige Hebelarm des theoretischen, zweiarmigen Hebels aufbiegen mit der Folge, daß im Bereich der zugstangenseitigen Flanke 20 einer jeden Spannbacke 11 ein radial nach innen gerichteter Druck zusätzlich wirksam ist. Dies ist der Fall, obwohl die Spannbacken 11 in Höhe ihrer zugstangenseitigen Flanken 20 außen am Werkzeugschaft 1 nicht abgestützt, sondern ebenfalls freigeschnitten sind. Diese Wirkung nach Art eines zweiarmigen Hebels führt zu einer sicheren Beaufschlagung auch der zugstangenseitigen Außenkonusfläche 19 des Zugschaftes 8 und damit zu einer Überwindung etwaiger negativer Folgen der statischen Überbestimmung durch das Vorhandensein mehrerer Anlageflächen zwischen ·Spannbacken 11 und Werkzeugschaft 1 bzw. Zugschaft 8.

Zur Öffnung der Spannzange wird die Zugstange 3 entgegen der Anzugsrichtung 10 zurückgestoßen. Dabei stößt der Radialvorsprung 13 der Zugstange 3 gegen den Innenvorsprung 31 der Spannbacken 11 und schiebt diese in Richtung auf den Werkzeugkopf 4 aus ihrer Spannstellung. Dabei wird durch den Rundshnurring 37 über den Zugschaft 8 auch der Werkzeugkopf 4 mitgenommen. Sobald die Außenkonussegmente 21, 22 der Spannbacken 11 in Überdeckung mit den Innenkonusflächen 23, 24 des Werkzeugschaftes 1 kommen, öffnet sich das Spannfutter 7 unter dem Druck der Federelemente 12. Die Spannbacken 11 treten auseinander. Sobald die Flanken 20 der Spannbacken nicht mehr mit den Außenkonusflächen 19 des Zugschaftes 8 in radialer Überdeckung stehen, kann der Werkzeugkopf 4 ungehindert vom Werkzeugschaft 1 abgenommen werden.

Bezugszeichenliste

Rall, Hertel

1 Werkzeugschaft
2 Werkzeugschaftachse
3 Zugstange
4 Werkzeugkopf
5 Schneidkörper
6 Ausnehmung
7 Spannfutter
8 Zugschaft
9 Hirth-Verzahnung
10 Anzugsrichtung
11 Spannbacke
12 Federelement
13 Radialvorsprung
14 Flanke
15 Spannbackenvorsprung
16 Vorsprung
17 Flanke
18 Spannbackenvorsprung
19 Außenkonusfläche
20 Flanke-Innenkonus-Segmentfläche
21 Außenkonussegment
22 Außenkonussegment
23 Innenkonusfläche
24 Innenkonusfläche
25 Zylindersegmentfläche
26 Zylindersegmentfläche
27 Innenzylinderfläche
28 Innenzylinderfläche
29 Zugstangenanlageflanke
30 Winkel
31 Innenvorsprung
32 Gewindeverbindung
33 Bohrung
34 Bohrung
35 Verlängerungsansatz
36 Bohrung
37 Rundschnurring
38 Wegbegrenzungsanschlag
39 Wirkdurchmesser
40 Axiallänge

**Patentansprüche**

1. Geteiltes Werkzeug für die spanabhebende Bearbeitung mit

einem Werkzeugschaft (1),

einem eine Werkzeugschneide tragenden, in Längsrichtung des Werkzeugschaftes (1) gegen dessen Stirnfläche drehfest und zentriert verspannbaren Werkzeugkopf (4),

einer in Längsrichtung des Werkzeugschaftes (1) verschiebbar gelagerten, mit einem Kraftantrieb verbundenen Zugstange (3) und

einer durch die Zugstangenverschiebung betätigbaren Kupplung zwischen Werkzeugkopf (4) und Werkzeugschaft (1), gekennzeichnet durch folgende Merkmale :

a) die Kupplung enthält koaxial zur Zugstange (3) ein Spannfutter (7),

welches einerseits das werkzeugkopfseitige Ende (13) der Zugstande (3) und anderseits einen koaxial aus dem Werkzeugkopf (4) in Richtung auf die Zugstange (3) vorstehenden Zugschaft (8) mit radial nach innen weisenden Vorsprüngen (15, 18) umfaßt,

welches axial zwischen einer Öffnungs- und einer in Anzugsrichtung der Zugstange verschobenen Schließstellung verschiebbar in einer in die Stirnseite des Werkzeugschaftes (1) ausmündenden Ausnehmung (6) angeordnet ist, wobei die Umfangswand der Ausnehmung eine sich in Richtung auf den Werkzeugschaft (1) verjüngende Innenkonusfläche (23, 24) enthält, und

welches auf mindestens einem Teil seines Außenumfanges eine mit der Innenkonusfläche (23, 24) oder Werkzeugschaftausnehmung (6) zusammenwirkende Außenkonusfläche (19) enthält.

b) Die Zugstange (3) ist in ihrem von dem Spannfutter (7) umfaßten Bereich mit einem nach außen stehenden, insbesondere ringartigen Radialvorsprung (13) versehen,

dessen dem Werkzeugkopf (4) abgewandte Flanke (14) sowohl in Öffnungs- als auch in Schließstellung des Spannfutters (7) zur axialen Zugübertragung auf Spannbacken (11) von nach innen stehenden, zugstangenseitigen Vorsprüngen (15) der Spannbacken (11) überdeckt ist.

c) Der Zugschaft (8) des Werkzeugkopfes (4) ist in seinem vom Spannfutter (7) umfaßten Bereich mit einem radial nach außen stehenden, insbesondere ringartigen Vorsprung (16) versehen,

dessen der Zugstange (3) abgewandte Flanke (17)

in Schließstellung des Spannfutters (7) zur axialen Zugübertragung auf den Werkzeugkopf (4) von den nach innen stehenden zugschaftseitigen Spannbackenvorsprüngen (18) überdeckt ist,

jedoch in Öffnungsstellung des Spannfutters (7) außer Überdeckung mit den Spannbackenvorsprüngen (18) bleibt.

2. Werkzeug nach Anspruch 1, dadurch gekennzeichnet, daß die der Zugstange (3) abgewandte Flanke (17) des Radialvorsprunges (16) des Zugschaftes (8) eine sich in Anzugsrichtung (10) der Zugstange (3) öffnende Außenkonusfläche (19) ist, die in Schließstellung des Spannfutters (7) von den als Konussegmente ausgebildeten Flanken (20) der Spannbackenvorsprünge (18) beaufschlagt ist.

3. Werkzeug nach Anspruch 2, dadurch gekennzeichnet,

daß mehrere, insbesondere zwei Außenkonusflächen (19) in axialem Abstand auf dem Zugschaft (8) angeordnet sind und

daß die Spannbackenvorsprünge (18) als den Außenkonusflächen (19) entsprechende Innenkonus-Segmentflächen ausgebildet sind.

4. Werkzeug nach Anspruch 3, dadurch gekennzeichnet, daß die Außenkonusflächen des Zugschaftes (8) einen gleichen Durchmesser aufweisen.

5. Werkzeug nach einem oder mehreren der vorhergehenden Ansprüche, dadurch gekennzeichnet,

daß auf dem Außenumfang des Spannfutters (7) die Spannbacken (11) in Axialrichtung voneinander beabstandet mehrere, insbesondere zwei sich in Anzugsrichtung (10) der Zugstange (3) schließende Außenkonussegmente (21, 22) aufweisen und

daß die Umfangswand der Werkzeugschaftausnehmung (6) eine der Anzahl der Außenkonussegmente einer jeden Spannbacke entsprechende Zahl von mit den Außenkonussegmenten (21, 22) zusammenwirkenden Innenkonusflächen (23, 24) enthält.

6. Werkzeug nach Anspruch 5, dadurch gekennzeichnet, daß die Wirkdurchmesser der voneinander in Axialrichtung beabstandeten Außenkonussegmente (21, 22) der Spannbacken (11) gegeneinander abgestuft sind derart,

daß der Wirkdurchmesser des zugstangenseitigen Außenkonussegments (22) der kleinste und der des werkzeugkopfseitigen Außenkonussegments (21) der größte ist und

daß sich an jedes Außenkonussegment (21, 22) in Richtung auf den Werkzeugkopf (4) eine Zylindersegmentfläche (25, 26) anschließt, wobei die Spannbacken (11)

bei in Richtung auf den Werkzeugkopf (4) vorgeschobener Zugstange (3) und folglich geöffnetem Spannfutter (7) über ihre Außenkonussegmente (21, 22) an den entsprechenden Innenkonusflächen (23, 24) des Werkzeugschaftes (1) und

bei in ihrer Anzugsrichtung (10) angezogener Zugstange (3) und folglich geschlossenem Spannfutter (7) über ihre Zylindersegmentflächen (25, 26) an entsprechenden Innenzylinderflächen (27, 28) des Werkzeugschaftes (1) abgestützt sind.

7. Werkzeug nach Anspruch 6, dadurch gekennzeichnet, daß die werkzeugkopffernen Zylindersegmentflächen (26) der Spannbacken (11) in Axialrichtung zwischen den Zugstangenanlageflanken (29) und den werkzeugschaftseitigen Innenkonus-Segmentflächen (20) oder zwischen zwei Innenkonus-Segmentflächen der Spannbacken (11) liegen.

8. Werkzeug nach Anspruch 7, dadurch gekennzeichnet, daß die werkzeugkopffernen Zylindersegmentflächen (26) der Spannbacken (11) mittig zwischen den Zugstangenanlageflanken (29) und den werkzeugschaftseitigen Innenkonus-Segmentflächen (20) oder zwischen zwei Innenkonus-Segmentflächen (20) der Spannbacken (11) liegen.

9. Werkzeug nach Anspruch 7 oder 8, dadurch gekennzeichnet, daß die dem Werkzeugkopf (4) zugewandten Zylindersegmentflächen (25) der Spannbacken (11) in etwa derselben Radialebene wie die dem Werkzeugkopf (4) zugewandten Innenkonus-Segmentflächen (20) der Spannbacken (11) liegen.

10. Werkzeug nach einem oder mehreren der vorhergehenden Ansprüche, dadurch gekennzeichnet, daß die Innenkonus-Segmentflächen (20) mit der Werkzeugschaftachse (2) einen Winkel (30) von etwa 30° einschließen.

11. Werkzeug nach einem oder mehreren der vorhergehenden Ansprüche, gekennzeichnet durch an den Spannbacken (11) angeordnete, in den zum Werkzeugkopf gerichteten Verschiebeweg der Zugstange (3) oder ihres Radialvorsprungs (13) hineinstehende Innenvorsprünge (31).

12. Werkzeug nach einem oder mehreren der vorhergehenden Ansprüche, dadurch gekennzeichnet, daß der Kegelspitzenwinkel der Innenkonusflächen (23, 24) der Ausnehmung (6) des Werkzeugschaftes (1) nicht selbsthemmend ist.

13. Werkzeug nach einem oder mehreren der vorhergehenden Ansprüche, dadurch gekennzeichnet, daß der Zugschaft (8) ein vom Werkzeugkopf (4) getrennt hergestelltes Teil ist und vorzugsweise mittels einer Gewindeverbindung (32) mit den übrigen Teilen des Werkzeugkopfes (4) verbunden ist.

14. Werkzeug nach Anspruch 1, dadurch gekennzeichnet, daß die aneinanderliegenden Stirnflächen von Werkzeugkopf (4) und Werkzeugschaft (1) durch eine Plan-Kerb-Verzahnung, insbesondere eine Hirth-Verzahnung (9) gebildet sind.

15. Werkzeug nach einem oder mehreren der vorhergehenden Ansprüche, dadurch gekennzeichnet, daß Zugstange (3) und Zugschaft (8) von mindestens einer in axialer Richtung verlaufenden Bohrung (33, 34) durchsetzt sind, die Teil je eines Verbindungsweges zwischen der Werkzeugschneide des Werkzeugkopfes (4) und einem am dem Werkzeugkopf (4) fernen Ende der Zugstange (3) angeordneten Hilfsaggregat sind.

16. Werkzeug nach Anspruch 15, dadurch gekennzeichnet, daß eine oder jeweils eine axiale Bohrung (33) der Zugstange (3) mit einer solchen (34) des Zugschaftes (8) fluchtet.

17. Werkzeug nach Anspruch 15 oder 16, dadurch gekennzeichnet, daß die axialen Bohrungen (33, 34) zur Durchleitung des Lichtstrahls eines optischen oder elektrooptischen Meßsystems dienen.

18. Werkzeug nach Anspruch 15, dadurch gekennzeichnet, daß die axialen Bohrungen (33, 34) zur Durchleitung von Kühl- oder Schmiermittel dienen.

19. Werkzeug nach einem oder mehreren der vorhergehenden Ansprüche 15 bis 18, dadurch gekennzeichnet, daß das werkzeugkopfseitige Ende der Zugstange (3) mittels eines axialen Verlängerungsansatzes (35) innerhalb einer in das zugstangenseitige Ende des Zugschaftes (8) des Werkzeugkopfes (4) eingebrachten Bohrung (36) axial verschiebbar geführt ist.

20. Werkzeug nach Anspruch 19, dadurch gekennzeichnet, daß die Führung zwischen Zugstange (3) und Zugschaft (8) flüssigkeitsdicht ist.

21. Werkzeug nach Anspruch 20, dadurch gekennzeichnet, daß die Dichtung zwischen Verlängerungsansatz (35) der Zugstange (3) und Zugschaft (8) durch einen den Verlängerungsansatz (35) umgebenden, in einer Ringnut einliegenden Rundschnurring (37) gebildet ist.

22. Werkzeug nach einem oder mehreren der vorhergehenden Ansprüche, dadurch gekennzeichnet, daß der Werkzeugschaft (1) an seinem werkzeugkopfseitigen Ende mit einem in axialer Richtung wirksamen, insbesondere kreisringförmigen Wegbegrenzungsanschlag (38) für die Öffnungsbewegung des Spannfutters (7) versehen ist.

23. Werkzeug nach einem oder mehreren der vorhergehenden Ansprüche, dadurch gekennzeichnet, daß die in axialer Richtung zueinander parallel verlaufenden Spannbacken (11) des Spannfutters (7) durch Federdruck auseinanderspreizbar sind.

24. Werkzeug nach Anspruch 23, dadurch gekennzeichnet, daß die zwischen den Spannbacken (11) angeordneten Federelemente (12) Zwischenstege aus kompressiblem, gummielastischem Werkstoff sind, die mit ihren beiderseits benachbarten Spannbacken (11) fest verbunden, insbesondere an diese angegossen oder anvulkanisiert sind.

**Claims**

1. A composite tool for cutting operations with
   a tool shank (1)
   a cutter head (4) carrying a cutting edge, capable of being secured in the longitudinal direction of the tool shank (1) to its front face, fixed for rotation and in a centred position,
   a draw rod (3) mounted to slide in the longitudinal direction of the tool shank (1), connected to a power drive and
   a clutch between the cutter head (4) and tool shank (1) operable by the displacement of the draw rod, characterised by the following features ;
   a) the coupling contains coaxially with the draw rod (3) a chuck (7) which does, on the one hand encompass the end (13) of the draw rod (3) facing the cutter head and, on the other hand, a draw shaft (8) projecting coaxially from the cutter head (4) in the direction of the draw rod (3) with radial projections (15, 18) pointing inwards

which (chuck) is slidably disposed between an opening position and a closed position displaced in the pulling direction of the draw rod inside a recess (6), opening out in the front face of the tool shank (1)

the peripheral wall of the recess containing an inner conical surface (23, 24) tapering towards tool shank (1), and

which (chuck) contains, at least over a part of its external periphery, an external conical surface (19) cooperating with the inner conical surface (23, 24) of the tool shank recess (6).

b) The draw rod (3) is provided in its zone encompassed by the chuck (7) with a radial projection (13) pointing outwards, in particular of an annular kind

whose side (14) facing away from the cutter head (4) is covered over in both the open and closed positions of the chuck (7) by projections (15) of the chuck jaws (11) disposed inwards on the side of the draw rod for the axial transmission of the pull on to the chuck jaws (11).

c) The draw shaft (8) of the cutter head (4) is provided in its zone encompassed by chuck (7) with a radial projection (16) towards the outside, in particular of an annular kind,

whose side (17) turned away from the draw rod (3)

is covered over in the closed position of the chuck (7) by chuck jaw projections (18) pointing inwards on the side of the draw shaft for the axial transmission of the pull on to the cutter head (4).

which remains, however uncovered by the chuck jaw projections (18) in the open position of chuck (7).

2. A tool according to Claim 1, characterised in that the side (17) turned away from the draw rod (3) of the radial projection (16) of the draw shaft (8) is an external conical surface (19) opening out in the pulling direction (10) of the draw rod (3) which is in the closed position of the chuck (7) acted upon by the sides (20) of the chuck jaw projections (18), which sides are formed as cone segments.

3. A tool according to Claim 2, characterised in that several, in particular two, external conical surfaces (19) are interspaced axially on the draw shaft (8) and

that the chuck jaw projections (18) are designed as internal conical segment surfaces corresponding to the external conical surfaces (19).

4. A tool according to Claim 3, characterised in that the external conical surfaces of the draw shaft (8) have the same diameter.

5. A tool according to one or several of the preceding Claims, characterised in that

the chuck jaws (11) do, on the outer periphery of the chuck (7), have interspaced axially from each other, several external cone segments (21, 22) and two in particular, closing in the pulling direction of the draw rod (3) and

that the peripheral wall of the tool shank recess (6) contains a number, corresponding to the number of external cone segments of each chuck jaw, of internal cone surfaces (23, 24) cooperating with the external cone segments (21, 22).

6. A tool according to Claim 5, characterised in that the operative diameters of the external cone segments (21, 22) axially interspaced from each other, of the chuck jaws (11) are stepped with respect to each other in such a way,

that the operative diameter of the external cone segment (22) on the side of the pull rod is smallest and that of the external cone segment facing the cutter head is the largest and

that a cylinder segment (25, 26) follows each external cone segment (21, 22) in the direction of the cutter head (4) the chuck jaws (11)

being supported via their external cone segments (21, 22) on the corresponding internal conical surfaces (23, 24) of the tool shank (1) when the draw rod (3) is advanced in the direction of the cutter head (4) and the chuck (7) is therefore open and

that they are supported via their cylinder segment surfaces (25, 26) on corresponding internal cylindrical surfaces (27, 28) of the tool shank (1) when the draw rod (3) is drawn in its pulling direction (10) and the chuck (7) is therefore closed.

7. A tool according to Claim 6, characterised in that the cylinder segment surfaces (26) of the chuck jaws (11) on the side remote from the cutter head lie, viewed in the axial direction, between the bearing sides (29) on the pull rod and the inner cone segment surfaces (20) on the side of the cutter head or between two inner cone segment surfaces of the chuck jaws (11).

8. A tool according to Claim 7, characterised in that the cylinder segment surfaces (26) of the chuck jaws (11) which are remote from the cutter head, lie centrally between the bearing sides (29) of the pull rod and the inner cone segment surfaces (20) on the side of the cutter head or between two inner cone segment surfaces (20) of the chuck jaws (11).

9. A tool according to Claim 7 or 8, characterised in that the cylinder segment surfaces (25) of the chuck jaws (7) turned towards the cutter head (4) lie in approximately the same radial plane as the inner cone segment surfaces (20) of the chuck jaws (11), turned towards the cutter head (4).

10. A tool according to one or several of the preceding Claims, characterised in that the inner cone segment surfaces (20) form an angle (30) of approximately 30° with the axis (2) of the tool shank.

11. A tool according to one or several of the preceding Claims, characterised by inner projections (31) arranged on the chuck jaws (11) projecting into the displacement part of the draw rod (3) or its radial projection (13) directed towards the cutter head.

12. A tool according to one or several of the preceding Claims, characterised in that the tip angle of taper of the inner conical surfaces (23, 24) of recess (6) of the tool shank (1) is not self locking.

13. A tool according to one or several of the preceding Claims, characterised in that the draw shaft (8) is a component made separately from the cutter head (4) and is preferably joined by means of a threaded fitting (32) with the remaining part of the cutter head (4).

14. A tool according to Claim 1, characterised in that the adjoining front faces of the cutter head (4) and of tool shank (1) are formed by a toothed serration, and a Hirth type serration (9) in particular.

15. A tool according to one or several of the preceding Claims, characterised in that the draw rod (3) and draw shaft (8) are traversed by at least one bore (33, 34) in the axial direction, which form part of one connection duct each between the cutting edge of the cutter head (4) and an auxiliary unit arranged at the end of the draw rod (3) which is remote from the cutter head (4).

16. A tool according to Claim 15, characterised in that one, or respectively one, axial bore (33) of the draw rod (3) is aligned with one such bore (34) of the draw shaft (8).

17. A tool according to Claim 15 or 16, characterised in that the axial bores (33, 34) serve for the transmission of a light ray of an optical or electro-optical measurement system.

18. A tool according to Claim 15, characterised in that the axial bores (33, 34) serve for the delivery of coolants or lubricating agents.

19. A tool according to one or several of the preceding Claims 15 to 18, characterised in that the end of the draw rod (3) facing the cutter head is mounted for axial displacement by means of an axial extension fitting (35) inside a bore (36) sunk into the end of the draw shaft (8) of cutter head (4) facing towards the draw rod.

20. A tool according to Claim 19, characterised in that the connection between the draw rod (3) and the draw shaft (8) is proof against the leakage of liquids.

21. A tool according to Claim 20, characterised in that the seal between the extension fitting (35) of the draw rod (3) and the draw shaft (8) is formed by an O ring (37) surrounding the extension fitting (35) inserted in an annular groove.

22. A tool according to one or several of the preceding Claims, characterised in that the tool shank (1) is provided at its end facing the cutter head with a travel stop (38), in particular of an annular shape, which is effective in the axial direction, for the opening movement of the chuck (7).

23. A tool according to one or several of the preceding Claims, characterised in that the chuck jaws (11) of the chuck (7) lying parallel to each other in the axial direction can be spread out from each other by spring pressure.

24. A tool according to Claim 23, characterised in that the spring elements (12) disposed between the chuck jaws (11) are cross pieces made of a compressible rubber elastic material which are rigidly joined to their adjacent chuck jaws (11) on either side, being in particular cast on to them or attached by vulcanisation.

## Revendications

1. Outil divisé pour l'usinage par enlèvement de copeaux, avec
un fût d'outil (1),
une tête d'outil (4) portant un tranchant d'outil, pouvant être serrée de manière solidaire en rotation et centrée dans le sens longitudinal du fût d'outil (1) contre sa surface frontale,
un tirant (3) supporté à coulissement suivant la direction longitudinale du fût d'outil (1), et relié à une transmission de force, et
un accouplement pouvant être actionné par le coulissement du tirant, entre la tête d'outil (4) et le fût d'outil (1), caractérisé par les caractéristiques suivantes :
a) l'accouplement comporte co-axialement par rapport au tirant (3), un mandrin de serrage (7),
qui enserre, d'une part, l'extrémité côté tête d'outil (13) du tirant (3) et, d'autre part, une tige de traction (8) faisant saillie co-axialement de la tête d'outil (4) dans la direction du tirant (3), avec des saillies (15, 18) dirigées radialement vers l'intérieur,
qui peut être déplacé axialement entre une position d'ouverture et une position de fermeture décalée dans la direction de traction du tirant, dans un évidement (6) débouchant dans la face frontale du fût d'outil (1),
la paroi périphérique de l'évidement offrant une surface conique interne (23, 24) se réduisant dans la direction du fût d'outil (1), et
qui sur une partie au moins de sa périphérie externe, offre une surface conique externe (19) coopérant avec la surface conique interne (23, 24) de l'évidement (6) du fût d'outil ;
b) le tirant (3) est doté dans sa zone enserrée par le mandrin de serrage (7), d'une saillie radiale (13) en particulier annulaire, faisant saillie vers l'extérieur,
dont le flanc (14) opposé à la tête d'outil (4) est recouvert dans la position d'ouverture aussi bien que dans la position de fermeture du mandrin de serrage (7), afin de transmettre une traction axiale aux mâchoires de serrage (11), par des saillies (15) côté tirant faisant saillie vers l'intérieur, des mâchoires de serrage (11) ;
c) la tige de traction (8) de la tête d'outil (4) est dotée dans sa zone enserrée par le mandrin de serrage (7), d'une saillie radiale (16) en particulier annulaire, faisant saillie vers l'extérieur, dont le flanc (17) opposé au tirant (3)
est recouvert en position de fermeture du mandrin de serrage (7), afin de transmettre une traction axiale à la tête d'outil (4), par les saillies de mâchoires de serrage (18) faisant saillie vers l'intérieur,
mais reste cependant en position d'ouverture du mandrin de serrage (7), hors de chevauchement avec les saillies de mâchoire de serrage (18).

2. Outil suivant la revendication 1,. caractérisé en ce que le flanc (17) opposé au tirant (3) de la saillie radiale (16) de la tige de traction (8) est une surface conique externe (19) s'ouvrant dans le sens de traction (10) du tirant (3), qui est sollicitée en position de fermeture du mandrin de serrage (7) par les flancs (20) réalisés en tant que segments de cône, des saillies de mâchoire de serrage (18).

3. Outil suivant la revendication 2, caractérisé en ce que plusieurs, en particulier deux surfaces coniques externes (19) sont situées avec un écartement axial sur la tige de traction (8), et

en ce que les saillies de mâchoire de serrage (18) sont réalisées en tant que surfaces de segment de cône interne correspondant aux surfaces de segment de cône interne correspondant aux surfaces coniques externes (19).

4. Outil suivant la revendication 3, caractérisé en ce que les surfaces de cône externe de la tige de traction (8) présentent un même diamètre.

5. Outil suivant une ou plusieurs des revendications précédentes, caractérisé

en ce que sur la périphérie externe du mandrin de serrage (7), les mâchoires de serrage (11) présentent plusieurs, en particulier deux segments de cône externe (21, 22) espacés mutuellement dans le sens axial et se fermant suivant la direction de traction (10) du tirant (3), et

en ce que la paroi périphérique de l'évidement (6) du fût d'outil offre un nombre correspondant au nombre des segments de cône externe de chaque mâchoire de serrage, de surfaces de cône interne (23, 24) coopérant avec les segments de cône externe (21, 22).

6. Outil suivant la revendication 5, caractérisé en ce que les diamètres effectifs des segments de cône externe (21, 22) mutuellement espacés dans le sens axial, des mâchoires de serrage (11), sont mutuellement gradués de telle sorte

que le diamètre effectif du segment de cône externe (22) du côté du tirant soit le plus petit et celui du segment de cône externe (21) du côté de la tête d'outil soit le plus grand, et

qu'à chaque segment de cône externe (21, 22) se raccorde dans la direction de la tête d'outil (4), une surface de segment cylindrique (25, 26), les mâchoires de serrage (11) étant soutenues

avec le tirant (3) avancé dans la direction de la tête d'outil (4) et par conséquent le mandrin de serrage (7) ouvert, par l'intermédiaire de leurs segments de cône externe (21, 22), sur les surfaces de cône interne correspondantes (23, 24) du fût d'outil (1), et

avec le tirant (3) tiré dans son sens de traction (10) et par conséquent le mandrin de serrage (7) fermé, par l'intermédiaire de leurs surfaces de segment cylindrique (25, 26), sur des surfaces cylindriques internes (27, 28) correspondantes du fût d'outil (1).

7. Outil suivant la revendication 6, caractérisé en ce que les surfaces de segment cylindrique (26) écartées de la tête d'outil, des mâchoires de serrage (11) se situent suivant la direction axiale entre les flancs (29) d'application de tirant et les surfaces de segment de cône interne (20) côté fût d'outil, ou entre deux surfaces de segment de cône interne (20) des mâchoires de serrage (11).

8. Outil suivant la revendication 7, caractérisé en ce que les surfaces de segment cylindrique (26) éloignées de la tête d'outil, des mâchoires de serrage (11) se situent au milieu entre les flancs d'application de tirant (29) et les surfaces de segment de cône interne (20) côté fût d'outil, ou entre deux surfaces de segment de cône interne (20) des mâchoires de serrage (11).

9. Outil suivant la revendication 7 ou 8, caractérisé en ce que les surfaces de segment cylindrique (25) dirigées vers la tête d'outil (4), des mâchoires de serrage (11) se situent approximativement dans le même plan radial que les surfaces de segment de cône interne (20) dirigées vers la tête d'outil (4), des mâchoires de serrage (11).

10. Outil suivant une ou plusieurs des revendications précédentes, caractérisé en ce que les surfaces de segment de cône interne (20) font avec l'axe (2) du fût d'outil un angle (30) d'environ 30°.

11. Outil suivant une ou plusieurs des revendications précédentes, caractérisé par des saillies internes (31) disposées sur les mâchoires de serrage (11), pénétrant dans la voie de déplacement vers la tête d'outil du tirant (3) ou de sa saillie radiale (13).

12. Outil suivant une ou plusieurs des revendications précédentes, caractérisé en ce que l'angle de sommet de cône des surfaces de cône interne (23, 24) de l'évidement (6) du fût d'outil (1) n'est pas auto-bloquant.

13. Outil suivant une ou plusieurs des revendications précédentes, caractérisé en ce que la tige de traction (8) est une pièce réalisée indépendamment de la tête d'outil (4) et est de préférence reliée par une liaison à pas de vis (32) aux autres parties de la tête d'outil (4).

14. Outil suivant la revendication 1, caractérisé en ce que les surfaces frontales s'appliquant l'une contre l'autre de la tête d'outil (4) et du fût d'outil (1) sont formées par un crantage plan-encoche, en particulier un crantage Hirth (9).

15. Outil suivant une ou plusieurs des revendications précédentes, caractérisé en ce que le tirant (3) et la tige de traction (8) sont traversés par au moins un alésage (33, 34) s'étendant dans le sens axial, ces alésages faisant partie d'un parcours de liaison entre le tranchant d'outil de la tête d'outil (4) et une unité auxiliaire disposée à l'extrémité éloignée de la tête d'outil (4), du tirant (3).

16. Outil suivant la revendication 15, caractérisé en ce qu'un ou chaque alésage axial (33) du tirant (3) s'aligne avec un tel alésage (34) de la tige de traction (8).

17. Outil suivant la revendication 15 ou 16, caractérisé en ce que les alésages axiaux (33, 34) servent au passage du faisceau lumineux d'un système de mesure optique ou électro-optique.

18. Outil suivant la revendication 15, caractérisé en ce que les alésages axiaux (33, 34) servent à faire circuler un agent de refroidissement ou de lubrification.

19. Outil suivant une ou plusieurs des revendications 15 à 18, caractérisé en ce que l'extrémité côté tête d'outil du tirant (3) est guidée à coulissement axial au moyen d'un appendice de prolongement axial (35), dans un alésage (36) pratiqué dans l'extrémité côté tirant de la tige de traction (8) de la tête d'outil (4).

20. Outil suivant la revendication 19, caractérisé en ce que le guidage entre le tirant (3) et la tige de traction (8) est étanche au liquide.

21. Outil suivant la revendication 20, caractérisé en ce que l'étanchéité entre l'appendice de prolongement (35) du tirant (3) et la tige de traction (8) est assurée par un anneau toroïdal (37) entourant l'appendice de prolongement (35) et reposant dans une gorge annulaire.

22. Outil suivant une ou plusieurs des revendications précédentes, caractérisé en ce que le fût d'outil (1) est doté à son extrémité côté tête d'outil, d'une butée de fin de course (38) agissant dans le sens axial, en particulier circulaire, pour le mouvement d'ouverture du mandrin de serrage (7).

23. Outil suivant une ou plusieurs des revendications précédentes, caractérisé en ce que les mâchoires de serrage (11) s'étendant parallèlement entre elles dans le sens axial, du mandrin de serrage (7) peuvent être écartées l'une de l'autre par une pression de ressort.

24. Outil suivant la revendication 23, caractérisé en ce que les éléments de ressort (12) disposés entre les mâchoires de serrage (11) sont des entretroises en matière compressible offrant l'élasticité du caoutchouc, qui sont reliées rigidement à leurs mâchoires de serrage (11) adjacentes de part et d'autre, en particulier en étant moulées ou vulcanisées sur celles-ci.

Fig. 1

0 101 917

Fig. 2

**Fig. 3**

0 101 917

Fig. 4

Fig. 5